# EUROPÄISCHE PATENTANMELDUNG

(11) **EP 3 552 942 A1**
(43) Veröffentlichungstag der Anmeldung: **16.10.2019**
(21) Anmeldenummer: 19167452.2
(22) Anmeldetag: 04.04.2019
(51) Int. Cl.: B62M 1/24, B62M 1/18, B62J 1/00

(54) **MUSKELKRAFTANTRIEB UND VORRICHTUNG MIT EINEM MUSKELKRAFTANTRIEB**

(30) Priorität: 09.04.2018 DE 102018108381
(71) Anmelder: Kraaz, Axel, 63179 Obertshausen (DE)
(72) Erfinder: Kraaz, Axel, 63179 Obertshausen (DE)
(74) Vertreter: Spengler, Robert

(57) **Zusammenfassung**

Ein Muskelkraftantrieb (2, 22) weist einen ersten Antriebshebel (5, 23) auf, der eine erste Aufnahmeschale (7, 26) konkaven Querschnitts aufweist und der an einem ersten Lager (6) um eine Drehachse (11) drehbar gelagert ist. Ferner weist der Muskelkraftantrieb (2, 22) einen zum ersten Antriebshebel (5, 23) im Gegentakt beweglichen zweiten Antriebshebel (8, 24) auf, der eine zweite Aufnahmeschale (10, 29) konkaven Querschnitts aufweist und der an einem zweiten Lager (9) um die Drehachse (11) drehbar gelagert ist. Beide Aufnahmeschalen (7, 26; 10, 29) sind bezüglich eines Drehsinns um die Drehachse (11) gleich orientiert. Das erste Lager (6) und das zweite Lager (9) begrenzen ein lichtes Maß und bei Projektion der Aufnahmeschalen (7, 26; 10; 29) auf eine zum lichten Maß im Wesentlichen parallele Gerade ist eine entlang der Geraden gemessene größte Entfernung zwischen voneinander abgewandten Seiten der ersten Aufnahmeschale (7, 26) und der zweiten Aufnahmeschale (10, 29) höchstens gleich dem lichten Maß.

## Beschreibung

Die vorliegende Erfindung betrifft einen Muskelkraftantrieb, und insbesondere einen Muskelkraftantrieb für den Beinbetrieb bzw. einen beinbetriebenen Muskelkraftantrieb, mit einem ersten Antriebshebel, der eine erste Aufnahmeschale konkaven Querschnitts aufweist und der an einem ersten Lager um eine Drehachse drehbar gelagert ist, und einem zum ersten Antriebshebel im Gegentakt beweglichen zweiten Antriebshebel, der eine zweite Aufnahmeschale konkaven Querschnitts aufweist und der an einem zweiten Lager um die Drehachse drehbar gelagert ist. Beide Aufnahmeschalen sind bezüglich eines Drehsinns um die Drehachse gleich orientiert.

Bekanntlich versteht man unter einem manuellen Antrieb oder auch Muskelkraftantrieb einen Antrieb für ein Werkzeug, eine Maschine, ein Fahrzeug oder eine sonstige technische Einrichtung mittels Muskelkraft. Gelegentlich spricht man auch von Muskelkraftbetrieb, so zum Beispiel bei muskelkraftbetriebenen Fahrzeugen, wobei als muskelkraftbetriebene Fahrzeuge alle Arten von Fahrzeugen aufgefasst werden, die rein durch Nutzung der Muskelkraft bewegt werden, welche von Fahrern der muskelkraftbetriebenen Fahrzeuge aufgebracht wird, und die nicht durch Maschinen oder äußere Kräfte wie beispielsweise Wind angetrieben werden.

Ein bekanntes Beispiel für ein muskelkraftbetriebenes Fahrzeug bzw. für ein Fahrzeug mit Muskelkraftantrieb ist das Fahrrad. Fahrräder weisen im Allgemeinen starr konstruierte Fahrradsättel auf, die sich in erster Linie durch ihre Polsterung und ihre Ausformung unterscheiden, um Druckstellen oder Schmerzen beim Fahren zu minimieren.

Beispielsweise ist in der DE 103 09 352 A1 ein Fahrradsattel offenbart, der aus zwei beweglich gelagerten Sitzhälften besteht. Jedoch ist nur ein Verkippen der Sitzhälften vorgesehen, während eine Lastaufnahme durch das Gesäß und die Beckenknochen stattfindet. Die Sitzhälften ruhen auf einem Kalottengelenk und ein Lastwechsel muss durch Druck von Gesäß und Oberschenkel herbeigeführt werden. Einem ähnlichen Ansatz folgt die US 5,725,274, wobei auch hier die Sattelbewegung durch Oberschenkel und Gesäß ausgelöst werden muss.

Ferner sind geteilte Sättel bekannt, beispielsweise aus der DE 102 15 916 A1, welche die Kreisrotation der Pedale über ein Gestänge von den Pedalen auf die Sitzfläche übertragen. Diese Mechanik lässt allerdings keinen ungestörten Bewegungsablauf von Ober- und Unterschenkel zu und führt zwangsläufig zu schmerzhaften Kollisionen mit dem Gestänge.

In der US 6,142,562 A1 ist ein geteilter Fahrradsattel mit einer Wanne für die Oberschenkel offenbart.

Ferner sind geteilte Sättel mit einer Drehmomentumlenkung in verschiedenen Ausführungen bekannt, allerdings in einer Achsebene der beweglichen Sattelhälften mit einem Sitz für das Gesäß. Die US 4,089,559 erwähnt eine isolierte Zahnradumlenkung, allerdings auch in einer Achsebene zweier beweglicher Sattelhälften und dahinter liegend auch eine Sattelfläche zur Abstützung des Gesäßes.

Des Weiteren ist in der KR 1020110017084 A ein geteilter Fahrradsattel offenbart, dessen Sattelhälften um eine Drehachse drehbar sind. Zwischen Lagern für die Sattelhälften ist eine Körperstütze angebracht.

Schließlich zeigt die DE 10 2004 048 424 A1 eine Sattelanordnung mit beidseitig eines Sattels angeordneten Oberschenkelstützen, die in Vertikalrichtung verschwenkbar an dem Sattel angeordnet sind.

Zusammenfassend sind Sitze bekannter herkömmlicher Muskelkraftantriebe für den Beinbetrieb wie zum Beispiel Fahrradsättel oder auch zweiseitige, bekannte Sattelsysteme meist direkt an der Lastaufnahme des Körpers durch die Beckenknochen einer Bedienperson beteiligt. Sie stellen hier einen mehr oder weniger großen Widerstand im Bewegungsablauf dar, der zu Knochenhautreizungen und ähnlichen Beschwerden führen kann, die mit Schmerzsignalen wahrgenommen werden. Der Verwendung derartiger Muskelkraftantriebe wird dadurch erheblich beeinträchtigt.

Es ist die Aufgabe der vorliegenden Erfindung, einen Muskelkraftantrieb und eine Vorrichtung mit einem derartigen Muskelkraftantrieb zu schaffen, die bei Betriebspersonen auftretende Druckstellen oder Schmerzen vermeiden.

Diese Aufgabe wird durch den Muskelkraftantrieb mit den im Anspruch 1 genannten Merkmalen und die Vorrichtung mit den im Anspruch 6 genannten Merkmalen gelöst. Bevorzugte Ausführungsformen sind Gegenstand der abhängigen Ansprüche.

Gemäß der vorliegenden Erfindung begrenzen das erste Lager und das zweite Lager ein lichtes Maß und bei Projektion der Aufnahmeschalen auf eine zum lichten Maß im Wesentlichen parallele Gerade ist eine entlang der Geraden gemessene größte Entfernung zwischen voneinander abgewandten Seiten der ersten Aufnahmeschale und der zweiten Aufnahmeschale höchstens gleich dem lichten Maß bzw. kleiner als das lichte Maß. Als lichtes Maß, auch Lichtmaß oder Lichte oder Öffnungsmaß genannt, bezeichnet man im Allgemeinen die Breite oder Höhe eines Hohlraums oder eines Raumes, beziehungsweise den freien Abstand zwischen angrenzenden Bauteilen oder begrenzenden Hüllflächen. Folglich bezeichnet ein vom ersten Lager und vom zweiten Lager begrenztes lichtes Maß einen freien Abstand oder gegenstandsfreien Abstand oder einen Raum oder Freiraum zwischen dem ersten Lager und dem zweiten Lager. Anders ausgedrückt ist der Abstand oder Raum zwischen dem ersten Lager und dem zweiten Lager unverstellt oder hindernisfrei bzw. zwischen dem ersten Lager und dem zweiten Lager ist kein Hindernis oder Gegenstand vorhanden. Weil zudem das lichte Maß wenigstens gleich oder größer ist als die größte Entfernung zwischen voneinander abgewandten Seiten der ersten Aufnahmeschale und der zweiten Aufnahmeschale bei Projektion derselben auf eine zum lichten Maß parallele Gerade, schwebt das Gesäß einer den Muskelkraftantrieb betätigenden Person, deren jeweilige Oberschenkel in der ersten und der zweiten Aufnahmeschale aufgenommen sind, frei in der Luft. Mit anderen Worten ist der Muskelkraftantrieb derart ausgebildet, dass das Gesäß einer Bedienperson, deren jeweilige Oberschenkel in der ersten und der zweiten Aufnahmeschale aufgenommen sind bzw. deren linker Oberschenkel in der ersten Aufnahmeschale aufgenommen ist und deren rechter Oberschenkel in der zweiten Aufnahmeschale aufgenommen ist, frei in der Luft schwebt. Beispielsweise kann das Gesäß dabei zwischen dem ersten und dem zweiten Lager bzw. in einem Raum zwischen der ersten und zweiten Aufnahmeschale und dem ersten und zweiten Lager positioniert sein.

Beim erfindungsgemäßen Muskelkraftantrieb werden somit die Beckenknochen und das Hinterteil als Auflagefläche ausgespart und es treten auch keine Berührungspunkte mit den Hoden oder dem Dammbereich auf. Für diese Körperbereiche wird vielmehr eine Lastübertragung ausgespart. Stattdessen wird dem abwechselnd Gewicht übertragenden Körperteil, also im Wechsel dem linken und rechten Oberschenkel, eine optimale Unterstützung und Lagerung ermöglicht. Da der erste und der zweite Antriebshebel im Gegentakt beweglich sind, wird durch die Kraftausübung eines Oberschenkels, der denjenigen Antriebshebel nach unten drückt, in dessen Aufnahmeschale er aufgenommen ist, in gleichem Maße durch eine Drehmomentübertragung von einer Seite zur anderen der jeweilige andere Antriebshebel entsprechend nach oben gedrückt. Zudem ist beim Muskelkraftantrieb der vorliegenden Erfindung ein Scheuern oder Rutschen der empfindlichen Körperteile, das bei allen bekannten Sattelkonzepten nicht gänzlich vermieden werden kann, konstruktionsbedingt ausgeschlossen.

Bei einer bevorzugten Ausführungsform eines Muskelkraftantriebs sind jeweilige Linien, die durch Scheitelpunkte der jeweiligen Querschnitte an jeweiligen der Drehachse zugewandten Enden und an jeweiligen von der Drehachse abgewandten Enden der jeweiligen Aufnahmeschalen verlaufen, zur Drehachse windschief orientiert. Mit einem derartigen Muskelkraftantrieb ist es möglich, eine durch Drehpunkte der Oberschenkel einer Bedienperson des Muskelkraftantriebs verlaufende Beindrehachse mit der Drehachse in Deckung zu bringen. Hierbei befindet sich das Becken der Bedienperson zwischen dem ersten und dem zweiten Lager angeordnet, also innerhalb des von diesen beiden Lagern begrenzten lichten Maßes. Da sich in einem solchen Fall die Antriebshebel und die Oberschenkel um dieselbe Drehachse drehen, sind die Oberschenkel und die Aufnahmeschalen in jeder Phase der Auf- und Abwärtsbewegung deckungsgleich und es findet kein Verschieben der Oberschenkel innerhalb der Aufnahmeschalen statt.

Vorteilhafterweise ist die erste Aufnahmeschale dazu eingerichtet, verschiedene Positionen und/oder verschiedene Orientierungen am ersten Antriebshebel einzunehmen und/oder die zweite Aufnahmeschale ist dazu eingerichtet, verschiedene Positionen und/oder verschiedene Orientierungen am zweiten Antriebshebel einzunehmen oder die erste Aufnahmeschale ist bezüglich des ersten Antriebshebels fixiert und/oder die zweite Aufnahmeschale ist bezüglich des zweiten Antriebshebels fixiert. Bei einem derartig ausgebildeten Muskelkraftantrieb ist eine Einstellung der Aufnahmeschalen nach ergonomischen Gesichtspunkten möglich, was die Betätigung des Muskelkraftantriebs weiter erleichtert. Ferner kann der Muskelkraftantrieb vorteilhaft wenigstens einen Kippmechanismus oder wenigstens eine Schienenführung für die erste Aufnahmeschale und/oder für die zweite Aufnahmeschale aufweisen. Der Kippmechanismus, der insbesondere eine Drehmomentumlenkung bewirken kann, kann beispielsweise drei Kegelräder oder ein Planetengetriebe aufweisen. Mittels derartiger Einrichtungen kann sichergestellt werden, dass eventuelle Ungleichmäßigkeiten bei der Bewegung der Antriebshebel und der in den Aufnahmeschalen aufgenommenen Oberschenkel ausgeglichen werden und die Oberschenkel innerhalb der Aufnahmeschalen nicht verrutschen. Hingegen sind bezüglich des jeweiligen Antriebshebels fixierte Aufnahmeschalen relativ zum Antriebshebel weder verkippbar noch verschiebbar, das heißt dass sowohl deren Orientierung zum Antriebshebel als auch deren Position am Antriebshebel fixiert oder unveränderlich ist.

Vorzugsweise ist die erste Aufnahmeschale und/oder die zweite Aufnahmeschale wenigstens teilweise oder vollständig aus Kunststoff oder Kohlenstoff bzw. Carbon hergestellt oder mit Kunststoff oder Kohlenstoff bzw. Carbon beschichtet. Solcherart beschichtete Aufnahmeschalen weisen insbesondere einen geringen Reibungswert auf, so dass bei derartigen Aufnahmeschalen ein Verrutschen der Oberschenkel innerhalb der Aufnahmeschalen in Kauf genommen werden kann. Zudem können die Aufnahmeschalen mit einer Polsterung ausgestattet sein.

Bei einer Vorrichtung mit wenigstens einem Muskelkraftantrieb kann es sich ganz Allgemein um ein Fahrzeug oder ein Sportgerät oder ein Werkzeug oder eine Maschine handelt. So kann beispielsweise ein Fahrrad oder ein sogenanntes Spinning-Bike einen derartigen Muskelkraftantrieb aufweisen.

Die Vorrichtung kann vorzugsweise einen Rahmen aufweisen, an dem der Muskelkraftantrieb lösbar oder fest angeordnet ist. Je nach Bedarf kann der Muskelkraftantrieb von derartigen Vorrichtungen entfernt und zum Beispiel durch einen anderen Muskelkraftantrieb ersetzt werden.

Vorteilhaft weist die Vorrichtung wenigstens einen Stromspeicher und/oder wenigstens einen Elektromotor und/oder wenigstens eine Stromerzeugungseinrichtung auf. Handelt es sich bei der Vorrichtung beispielsweise um ein E-Bike, so kann die von der Betriebsperson aufgewendete Bewegungsenergie in elektrischen Strom zur Speisung des Stromspeichers oder der Batterie umgewandelt werden. Ferner kann der Elektromotor eines E-Bikes mit einem Getriebe zur Bewegung der Antriebshebel genutzt werden.

Die Erfindung wird nachfolgend anhand bevorzugter Ausführungsbeispiele unter Zuhilfenahme von Figuren näher erläutert. Es zeigen:
- Figur 1: eine Draufsicht auf einen Teil eines Fahrrades mit einem Muskelkraftantrieb;
- Figur 2: eine Seitenansicht des Fahrrades aus der Figur 1 ;
- Figur 3: eine Detailansicht des Muskelkraftantriebs;
- Figur 4: die Seitenansicht der Figur 2 mit Bedienperson;
- Figur 5: einen Muskelkraftantrieb mit beweglichen Aufnahmeschalen.

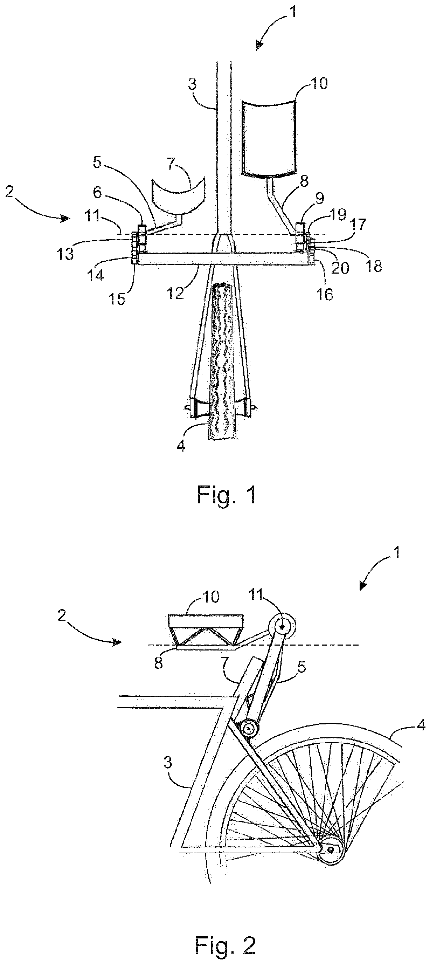

In der Figur 1 ist eine Draufsicht auf einen Teil eines Fahrrades 1 mit einem Muskelkraftantrieb 2 für den Beinbetrieb zu sehen, während die Figur 2 das Fahrrad 1 in der Seitenansicht zeigt. Vom Fahrrad 1 sind Teile eines Rahmens 3, an welchem der Muskelkraftantrieb 2 auf an sich bekannte Weise angebracht ist, sowie eines Hinterrades 4 in den Figuren 1 und 2 dargestellt. Da die Art und Weise, wie das Fahrrad 1 mit dem Muskelkraftantrieb 2 in Bewegung versetzt wird ebenfalls aus dem Stand der Technik bekannt ist, wird aus Gründen der Übersichtlichkeit im Folgenden auf diesbezügliche Einzelheiten nicht näher eingegangen.

Der Muskelkraftantrieb 2 weist einen ersten Antriebshebel 5 auf, der mit einem Ende an einem ersten Lager 6 drehbar gelagert ist. An einem dem ersten Lager 6 entgegengesetzten Ende des ersten Antriebshebels 5 weist derselbe eine erste Aufnahmeschale 7 mit im Wesentlichen konkavem Querschnitt auf. Ferner weist der Muskelkraftantrieb 2 einen zweiten Antriebshebel 8 auf, der auf entsprechende Weise mit einem Ende an einem zweiten Lager 9 drehbar gelagert ist und der an einem dem zweiten Lager 9 entgegengesetzten Ende eine zweite Aufnahmeschale 10 aufweist. Beide Antriebshebel 5 und 8 sind um dieselbe Drehachse 11 drehbar, die in der Figur 1 gestrichelt eingezeichnet ist. Dabei wird vom ersten Lager 6 und vom zweiten Lager 9 ein lichtes Maß begrenzt, was bedeutet, dass sich zwischen dem ersten Lager 6 und dem zweiten Lager 9 kein weiterer Gegenstand befindet und dass mithin zwischen den Lagern 6 und 9 ein Freiraum oder freier Raum oder freier Abstand vorhanden ist.

Die Bewegungen des ersten Antriebshebels 5 und des zweiten Antriebshebels 8 sind über eine zur Drehachse 11 parallele Welle 12 miteinander gekoppelt, so dass diese Bewegungen im Gegentakt verlaufen. Während sich der erste Antriebshebel 5 beispielsweise mit einem vorgegebenen Drehsinn um die Drehachse 11 dreht, führt der zweite Antriebshebel 8 eine zu diesem Drehsinn gegenläufige Drehbewegung aus und umgekehrt. Um dies zu erreichen ist an einer dem zweiten Lager 9 abgewandten Seite des ersten Lagers 6 an demselben ein erstes Ritzel 13 vorgesehen und an einem dem ersten Lager 6 benachbarten Ende der Welle 12 ist ein zweites Ritzel 14 vorgesehen. Eine erste Kette 15 ist sowohl um das erste Ritzel 13 als auch um das zweite Ritzel 14 geschlungen.

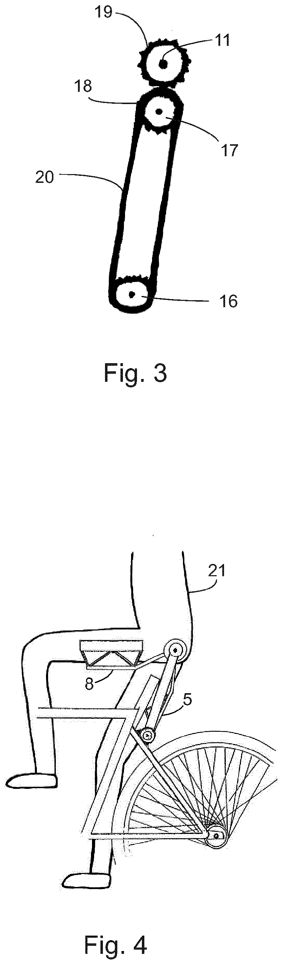

Wie in der Detailansicht der Figur 3 zu sehen ist, ist an einem dem zweiten Lager 9 benachbarten Ende der Welle 12 ein drittes Ritzel 16 vorgesehen, das mittels einer zweiten Kette 20 mit einem vierten Ritzel 17 gekoppelt ist, wobei die zweite Kette 20 das dritte Ritzel 16 und das zweite Ritzel 17 umschlingt. Das vierte Ritzel 17 ist mit einem an einer dem zweiten Lager 9 zugewandten Seite angeordneten ersten Zahnrad 18 verbunden. Zudem ist an einer dem ersten Lager 6 abgewandten Seite des zweiten Lagers 9 an demselben ein zweites Zahnrad 19 vorgesehen, mit dem das erste Zahnrad 18 im Eingriff steht. Mittels des ersten Zahnrades 18 und dem mit diesem im Eingriff stehenden zweiten Zahnrad 19 wird die gegenläufige Bewegung des ersten Antriebshebels 5 und des zweiten Antriebshebels 8 bewirkt.

Beide Aufnahmeschalen 7 und 10 sind relativ zur Drehachse 11 gleich orientiert. Das heißt, dass beide Aufnahmeschalen 7 und 10 bezüglich einer Drehung im Uhrzeigersinn um die Drehachse 11 in der Figur 2 in Richtung des Drehsinns geöffnet sind. Somit ist es einem Fahrer 21 des Fahrrades 1 möglich, seine Oberschenkel wie in der Figur 4 gezeigt in die Aufnahmeschalen 7 und 10 einzubringen.

Beim Fahren des Fahrrades 1 nimmt ein Fahrer 21 die in der Figur 4 gezeigte Position ein, in welcher der Oberschenkel des linken Beines in der ersten Aufnahmeschale 7 aufgenommen ist und der Oberschenkel des rechten Beines in der zweiten Aufnahmeschale 10. Da zwischen dem ersten Lager 6 und dem zweiten Lager 9 ein freier Raum ist bzw. da das erste Lager 6 und das zweite Lager 9 das lichte Maß begrenzen, kann das Becken des Fahrers 21 innerhalb dieses lichten Maßes angeordnet werden, wobei das Gesäß des Fahrers 21 ohne weitere Unterstützung frei schwebt. Dabei ist der Muskelkraftantrieb 2 bevorzugt derart dimensioniert, dass eine Drehachse der Oberschenkelknochen des Fahrers 21 mit der Drehachse 11 zusammenfällt. Dies wird unter anderem dadurch ermöglicht, dass eine Linie, die in der Figur 2 für die zweite Aufnahmeschale 10 gestrichelt eingezeichnet ist und welche die in der Figur 2 tiefsten Punkte der zweiten Aufnahmeschale 10 verbindet, zur Drehachse 11 windschief orientiert ist und diese nicht schneidet. Zu den in der Figur 2 tiefsten Punkten der zweiten Aufnahmeschale 10 gehören insbesondere auch der Scheitelpunkt des Querschnitts der zweiten Aufnahmeschale 10 an ihrem von der Drehachse 11 abgewandten Ende und der Scheitelpunkt des Querschnitts der zweiten Aufnahmeschale 10 an ihrem der Drehachse 11 zugewandten Ende. Entsprechendes gilt für die erste Aufnahmeschale 7, bei der eine in der Figur 2 nicht gezeigt Linie, die durch Scheitelpunkte des Querschnitts der ersten Aufnahmeschale 7 an ihrem der Drehachse 11 zugewandten Ende und an ihrem von der Drehachse 11 abgewandten Ende verläuft, zur Drehachse 11 windschief orientiert ist.

In der Figur 4 befindet sich der erste Antriebshebel 5 zusammen mit dem in der ersten Aufnahmeschale 7 aufgenommenen linken Oberschenkel in einer im Wesentlichen waagrechten Position, während der zweite Antriebshebel 8 mit dem in der zweiten Aufnahmeschale 10 aufgenommenen rechten Oberschenkel beinahe senkrecht orientiert ist. Wenn der Fahrer 21 nun mit seinem rechten Oberschenkel den zweiten Antriebshebel 8 nach unten drückt, wird diese Bewegung durch die Welle 12 zum ersten Antriebshebel 5 übertragen. Jedoch wird diese Bewegung infolge des zweiten Zahnrades 19 in eine Aufwärtsbewegung des ersten Antriebshebels 5 umgewandelt. Während sich der zweite Antriebshebel 8 nach unten bewegt, werden der erste Antriebshebel 5 und der linke Oberschenkel nach oben gedrückt. Wenn im umgekehrten Fall der erste Antriebshebel 5 vom linken Oberschenkel nach unten gedrückt wird, so werden der zweite Antriebshebel 8 und der rechte Oberschenkel nach oben gedrückt. Der erste Antriebshebel 5 und der zweite Antriebshebel 8 bewegen sich somit stets im Gegentakt. Weil während dieser Bewegungen das Gesäß des Fahrers 21 freischwebend ist und keinerlei Kontakt zu irgendwelchen das Gesäß unterstützenden Elementen hat, treten auch keinerlei unangenehme und Schmerzen verursachende Druckstellen auf.

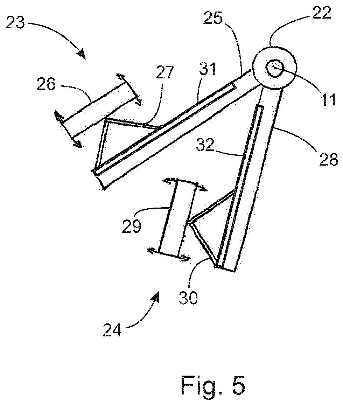

Um dem Fahrer 21 das Fahren noch mehr zu erleichtern, können die erste Aufnahmeschale 7 und die zweite Aufnahmeschale 10 beweglich ausgeführt sein. Dies ist in der Figur 5 gezeigt.

Figur 5 zeigt einen Muskelkraftantrieb 22 mit einem ersten Antriebshebel 23 und einem zweiten Antriebshebel 24. Der erste Antriebshebel 23 weist im Wesentlichen einen ersten Hebelarm 25, eine erste Aufnahmeschale 26 und einen ersten Kippmechanismus 27 auf, über den die erste Aufnahmeschale 26 mit dem ersten Hebelarm 25 verbunden ist. Entsprechend weist der zweite Antriebshebel 24 einen zweiten Hebelarm 28, eine zweite Aufnahmeschale 29 und einen zweiten Kippmechanismus 30 auf, über den die zweite Aufnahmeschale 29 mit dem zweiten Hebelarm 28 verbunden ist. Während der erste Kippmechanismus 27 innerhalb einer ersten Schienenführung 31 entlang des ersten Hebelarmes 25 verschiebbar ist, ist der zweite Kippmechanismus 30 innerhalb einer zweiten Schienenführung 32 entlang des zweiten Hebelarmes 28 verschiebbar.

Beim Muskelkraftantrieb 22 können die beiden Aufnahmeschalen 26 und 29 infolge der Kippmechanismen 27 und 30 relativ zu den jeweiligen Hebelarmen 25 und 28 verkippt werden, wie in der Figur 5 durch die Doppelpfeile angedeutet ist. Damit kann der Winkel bzw. die Orientierung der beiden Aufnahmeschalen 26 und 29 relativ zu den jeweiligen Hebelarmen 25 und 28 geändert werden. Gleichzeig oder alternativ dazu sind die beiden Aufnahmeschalen 26 und 29 infolge der Schienenführungen 31 und 32 entlang der Hebelarme 25 und 28 verschiebbar. Infolge dieser Beweglichkeit der beiden Aufnahmeschalen 26 und 29 ist gewährleistet, dass die Aufnahmeschalen 26 und 29 zu jeder Zeit eine für den Fahrer 21 günstigste und bequemste Position annehmen.

Insbesondere erleichtert es die Beweglichkeit der beiden Aufnahmeschalen 26 und 29, die durch Drehpunkte der Oberschenkel eines Fahrers 21 oder einer Bedienperson des Muskelkraftantriebs 22 verlaufende Beindrehachse mit der Drehachse 11 des ersten Antriebshebels 23 und des zweiten Antriebshebels 24 in Deckung zu bringen. Da sich in einem solchen Fall wie oben beschrieben die beiden Antriebshebel 23 und 24 und die Oberschenkel um dieselbe Drehachse 11 drehen, sind die Oberschenkel und die Aufnahmeschalen 26 und 29 in jeder Phase der Auf- und Abwärtsbewegung deckungsgleich und es findet kein Verschieben der Oberschenkel innerhalb der Aufnahmeschalen 26, 29 statt.

### Bezugszeichenliste

- 1.: Fahrrad
- 2.: Muskelkraftantrieb
- 3.: Rahmen
- 4.: Hinterrad
- 5.: erster Antriebshebel
- 6.: erstes Lager
- 7.: erste Aufnahmeschale
- 8.: zweiter Antriebshebel
- 9.: zweites Lager
- 10.: zweite Aufnahmeschale
- 11.: Drehachse
- 12.: Welle
- 13.: erstes Ritzel
- 14.: zweites Ritzel
- 15.: erste Kette
- 16.: drittes Ritzel
- 17.: viertes Ritzel
- 18.: erstes Zahnrad
- 19.: zweites Zahnrad
- 20.: zweite Kette
- 21.: Fahrer
- 22.: Muskelkraftantrieb
- 23.: erster Antriebshebel
- 24.: zweiter Antriebshebel
- 25.: erster Hebelarm
- 26.: erste Aufnahmeschale
- 27.: erster Kippmechanismus
- 28.: zweiter Hebelarm
- 29.: zweite Aufnahmeschale
- 30.: zweiter Kippmechanismus
- 31.: erste Schienenführung
- 32.: zweite Schienenführung

## Patentansprüche

1. Muskelkraftantrieb (2, 22) mit
einem ersten Antriebshebel (5, 23), der eine erste Aufnahmeschale (7, 26) konkaven Querschnitts aufweist und der an einem ersten Lager (6) um eine Drehachse (11) drehbar gelagert ist, und
einem zum ersten Antriebshebel (5, 23) im Gegentakt beweglichen zweiten Antriebshebel (8, 24), der eine zweite Aufnahmeschale (10, 29) konkaven Querschnitts aufweist und der an einem zweiten Lager (9) um die Drehachse (11) drehbar gelagert ist, wobei
beide Aufnahmeschalen (7, 26; 10, 29) bezüglich eines Drehsinns um die Drehachse (11) gleich orientiert sind,
das erste Lager (6) und das zweite Lager (9) ein lichtes Maß begrenzen und
bei Projektion der Aufnahmeschalen (7, 26; 10, 29) auf eine zum lichten Maß im Wesentlichen parallele Gerade eine entlang der Geraden gemessene größte Entfernung zwischen voneinander abgewandten Seiten der ersten Aufnahmeschale (7, 26) und der zweiten Aufnahmeschale (10, 29) höchstens gleich dem lichten Maß ist.

2. Muskelkraftantrieb (2, 22) nach Anspruch 1, bei dem jeweilige Linien, die durch Scheitelpunkte der jeweiligen Querschnitte an jeweiligen der Drehachse (11) zugewandten Enden und an jeweiligen von der Drehachse (11) abgewandten Enden der jeweiligen Aufnahmeschalen (7, 26; 10, 29) verlaufen, zur Drehachse (11) windschief orientiert sind.

3. Muskelkraftantrieb (2, 22) nach Anspruch 1 oder 2, bei dem die erste Aufnahmeschale (7, 26) dazu eingerichtet ist, verschiedene Positionen und/oder verschiedene Orientierungen am ersten Antriebshebel (5, 23) einzunehmen und/oder bei dem die zweite Aufnahmeschale (10, 29) dazu eingerichtet ist, verschiedene Positionen und/oder verschiedene Orientierungen am zweiten Antriebshebel (8, 24) einzunehmen oder bei dem die erste Aufnahmeschale (7, 26) bezüglich des ersten Antriebshebels (5, 23) fixiert ist und/oder bei dem die zweite Aufnahmeschale (10, 29) bezüglich des zweiten Antriebshebels (8, 24) fixiert ist.

4. Muskelkraftantrieb (2, 22) nach Anspruch 3 mit wenigstens einem Kippmechanismus (27, 30) und/oder wenigstens einer Schienenführung (31, 32) für die erste Aufnahmeschale (7, 26) und/oder für die zweite Aufnahmeschale (10, 29).

5. Muskelkraftantrieb (2, 22) nach einem der vorhergehenden Ansprüche, bei dem die erste Aufnahmeschale (7, 26) und/oder die zweite Aufnahmeschale (10, 29) wenigstens teilweise oder vollständig aus Kunststoff oder Kohlenstoff hergestellt oder mit Kunststoff oder Kohlenstoff beschichtet ist.

6. Vorrichtung (1) mit wenigstens einem Muskelkraftantrieb (2, 22) nach einem der vorhergehenden Ansprüche, bei der es sich um ein Fahrzeug oder ein Sportgerät oder ein Werkzeug oder eine Maschine handelt.

7. Vorrichtung (1) nach Anspruch 6 mit einem Rahmen (3), an dem der Muskelkraftantrieb (2, 22) lösbar oder fest angeordnet ist.

8. Vorrichtung (1) nach einem der Ansprüche 6 oder 7 mit wenigstens einem Stromspeicher und/oder wenigstens einem Elektromotor und/oder wenigstens einer Stromerzeugungseinrichtung.
